# EUROPÄISCHE PATENTSCHRIFT

(11) **EP 2 708 712 B1**
(45) Veröffentlichungstag und Bekanntmachung des Hinweises auf die Patenterteilung: **22.03.2017**
(21) Anmeldenummer: 13180198.7
(22) Anmeldetag: 13.08.2013
(51) Int. Cl.: F01N 5/02, F01N 3/04, F28D 7/02, F28F 1/36, F02B 47/08, F28D 7/00, F28D 21/00, F28F 1/24, F02M 26/28, F02M 26/32

(54) **Abgaswärmeübertrager**
Exhaust gas heat exchanger
Échangeur de chaleur de gaz d'échappement

(30) Priorität: 14.09.2012 DE 102012216452
(43) Veröffentlichungstag der Anmeldung: 19.03.2014
(73) Patentinhaber: Eberspächer Exhaust Technology GmbH & Co. KG, 66539 Neunkirchen (DE)
(72) Erfinder: Feuerbach, Matthias, 73734 Esslingen (DE); Schweizer, Jürgen, 70197 Stuttgart (DE); Birgler, Markus, 73249 Wernau (DE); Gaiser, Gerd, 72768 Reutlingen (DE); Klingler, Christof, 73252 Lenningen (DE)
(74) Vertreter: BRP Renaud & Partner mbB Rechtsanwälte Patentanwälte Steuerberater

(56) Entgegenhaltungen:
- WO-A1-2011/149409
- WO-A1-2011/153179
- DE-A1-102005 029 322
- DE-A1-102008 014 169
- JP-A- S59 196 983

## Beschreibung

Die vorliegende Erfindung betrifft einen Wärmeübertrager gemäß dem Oberbegriff des Anspruchs 1 sowie eine damit ausgestattete Vorrichtung. Die Erfindung betrifft außerdem ein mit einer solchen Vorrichtung ausgestattetes Fahrzeug.

Wärmeübertrager, bei denen ein erstes Medium mit einem zweiten Medium wärmeübertragend und mediengetrennt gekoppelt ist, sind allgemein bekannt. Kompakt und preiswert bauende Wärmeübertrager kommen beispielsweise bei Fahrzeugen zur Anwendung. Moderne Kraftfahrzeuge können mit einer Abwärmenutzungsanlage ausgestattet sein, beispielsweise um im Abgas einer Brennkraftmaschine mitgeführte Wärme zu nutzen. Eine derartige Abwärmenutzungsanlage kann beispielsweise nach einem Rankine-Kreisprozess, insbesondere nach einem Rankine-Clausius-Kreisprozess, arbeiten. Ein derartiger Kreisprozess umfasst einen Verdampfer, in dem ein Arbeitsmedium verdampft werden kann. Zweckmäßig kann ein derartiger Verdampfer in eine Abgasanlage der Brennkraftmaschine eingebunden werden, so dass die Wärme des Abgases zum Verdampfen des Arbeitsmediums genutzt werden kann. Zum Kühlen eines Motorblocks der Brennkraftmaschine kann ferner ein Motorkühlkreis vorgesehen sein, in den ein Fahrzeugkühler eingebunden sein kann, bei dem in üblicher Weise ein Kühlluftstrom wärmeübertragend mit einem Kühlmittel gekoppelt ist, das dem Motorblock die überschüssige Wärme entzieht.

Ein gattungsgemäßer Wärmeübertrager ist aus der DE 10 2005 029 322 A1 bekannt. Er umfasst einen ersten Einlass und einen ersten Auslass für ein zu kühlendes erstes Medium, die über einen das erste Medium führenden ersten Pfad miteinander fluidisch verbunden sind, einen zweiten Einlass und einen zweiten Auslass für ein zu beheizendes zweites Medium, die über einen das zweite Medium führenden zweiten Pfad miteinander fluidisch verbunden sind, und einen dritten Einlass und einem dritten Auslass für ein zu beheizendes drittes Medium, die über einen das dritte Medium führenden dritten Pfad fluidisch miteinander verbunden sind, wobei der erste Pfad mit dem zweiten Pfad und mit dem dritten Pfad mediengetrennt und wärmeübertragend gekoppelt ist, wobei die wärmeübertragende Kopplung zwischen dem ersten Pfad und dem zweiten Pfad bezüglich der Strömungsrichtung des ersten Mediums stromauf der wärmeübertragenden Kopplung zwischen dem ersten Pfad und dem dritten Pfad erfolgt, wobei ein vierter Pfad zum Führen des ersten Mediums vorgesehen ist, der unter Umgehung der wärmeübertragenden Kopplungen des ersten Pfads mit dem zweiten Pfad und mit dem dritten Pfad den ersten Einlass mit dem ersten Auslass fluidisch verbindet, wobei eine Steuereinrichtung zum Steuern einer Durchströmung des ersten Pfads und des vierten Pfads mit dem ersten Medium vorgesehen ist, und wobei ein gemeinsames Gehäuse vorgesehen ist, das die genannten Einlässe und die genannten Auslässe aufweist und das die genannten Pfade enthält.

Ein ähnlicher Wärmeübertrager, bei dem jedoch der steuerbare vierte Pfad fehlt, ist aus der DE 10 2008 014 169 A1 bekannt.

Aus der JP S59-196 983 A ist ein weiterer Wärmeübertrager ohne vierten Pfad bekannt, bei dem Wendeln verwendet werden, um separate Pfade auszubilden.

Aus der WO 2011/153179 A1 ist ein Wärmeübertrager bekannt, bei dem der zweite Pfad und der dritte Pfad radial nebeneinander, also parallel mit dem ersten Pfad wärmeübertragend gekoppelt sind.

Die vorliegende Erfindung beschäftigt sich mit dem Problem, für einen Wärmeübertrager der eingangs genannten Art bzw. für eine damit ausgestattete Vorrichtung bzw. für ein damit ausgestattetes Fahrzeug eine verbesserte Ausführungsform anzugeben, die sich insbesondere durch eine kompakte Bauweise und einen hohen Wirkungsgrad auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Wärmeübertrager so auszugestalten, dass darin ein primärseitiges erstes Medium sekundärseitig mit wenigstens zwei weiteren Medien, also zumindest sowohl mit einem zweiten Medium als auch mit einem dritten Medium wärmeübertragend gekoppelt ist, jedoch separat, nämlich hintereinander, so dass in der Strömungsrichtung des ersten Mediums zuerst das zweite Medium mit dem ersten Medium wärmeübertragend gekoppelt ist und erst anschließend das dritte Medium mit dem ersten Medium wärmeübertragend gekoppelt ist. Sofern sekundärseitig mehr als zwei Medien vorgesehen sind, kann jedes weiteres, also z.B. ein viertes Medium stromab des dritten Mediums mit dem ersten Medium wärmeübertragend gekoppelt sein. Das erste Medium liefert die Wärme, die zweistufig oder mehrstufig zuerst an das zweite Medium und danach an das dritte Medium und gegebenenfalls anschließend an wenigstens ein weiteres Medium übertragen wird. Durch die vorgeschlagene Bauweise ist es bei entsprechenden Volumenströmen der Medien insbesondere möglich, mit Hilfe der Wärme des ersten Mediums das zweite Medium auf eine höhere Temperatur aufzuheizen als das dritte Medium. Hierdurch ist der hier vorgestellte zweifache Wärmeübertrager, der auch als Doppelwärmeübertrager bezeichnet werden kann, vielfältig einsetzbar, wobei er gleichzeitig kompakt baut und insbesondere weniger Bauraum benötigt als zwei separate Wärmeübertrager. Des Weiteren ist die Einbindung dieses Doppelwärmeübertragers in einen das erste Medium führenden ersten Pfad besonders einfach so realisierbar, dass anschließend sowohl ein das zweite Medium führender zweiter Pfad als auch ein das dritte Medium führender dritter Pfad wärmeübertragend mit dem ersten Pfad gekoppelt sind. In der Folge vereinfacht sich der Einbau des hier vorgestellten Wärmeübertragers in ein komplexes System, wie es sich beispielsweise in der Peripherie einer Brennkraftmaschine und vorzugsweise in einem Fahrzeug befindet.

Der zweite Pfad und der dritte Pfad sind voneinander mediengetrennt vom ersten Pfad und gegebenenfalls vom vierten Pfad durch den Wärmeübertrager hindurchgeführt. In der Folge können für den zweiten Pfad und den dritten Pfad auch verschiedene Medien verwendet werden. Insbesondere können der zweite Pfad und der dritte Pfad auf unterschiedlichen Temperaturniveaus betrieben werden. Entsprechendes gilt dann auch für jeden weiteren sekundärseitigen Pfad.

Im Einzelnen schlägt die Erfindung zur Realisierung eines derartigen Wärmeübertragers vor, diesen mit einem ersten Einlass und einem ersten Auslass für ein zu kühlendes erstes Medium auszustatten, die über einen das erste Medium führenden ersten Pfad miteinander fluidisch verbunden sind. Ferner sind ein zweiter Einlass und ein zweiter Auslass für ein zu beheizendes zweites Medium vorgesehen, die über einen das zweite Medium führenden zweiten Pfad miteinander fluidisch verbunden sind. Schließlich sind ein dritter Einlass und ein dritter Auslass für ein zu beheizendes drittes Medium vorgesehen, die über einen das dritte Medium führenden dritten Pfad fluidisch miteinander verbunden sind. Des Weiteren ist der erste Pfad mit dem zweiten Pfad und mit dem dritten Pfad mediengetrennt und wärmeübertragend gekoppelt, wobei die wärmeübertragende Kopplung zwischen dem ersten Pfad und dem zweiten Pfad bezüglich der Strömungsrichtung des ersten Mediums stromauf der wärmeübertragenden Kopplung zwischen dem ersten Pfad und dem dritten Pfad erfolgt. Der erste Pfad ist dabei ebenso wie der zweite Pfad und der dritte Pfad gegenüber einer Umgebung des Wärmeübertragers abgedichtet bzw. davon getrennt. Der Wärmeübertrager ist dadurch insbesondere durch eine Baugruppe oder bauliche Einheit definiert, die sämtliche Anschlüsse für die Einbindung des Wärmeübertragers in externe, die Medien führende Leitungen aufweist, die intern die Medienpfade enthält und die außerdem die wärmeübertragende Kopplung des ersten Pfads mit dem zweiten Pfad und dem dritten Pfad ermöglicht bzw. beinhaltet. Entsprechende Einlässe und Auslässe können dann in entsprechender Weise auch für jeden weiteren sekundärseitigen Pfad vorhanden sein.

Erfindungsgemäß ist primärseitig ein vierter Pfad oder Bypasspfad zum Führen des ersten Mediums vorgesehen, der unter Umgehung der wärmeübertragenden Kopplungen des ersten Pfads mit dem zweiten Pfad und mit dem dritten Pfad den ersten Einlass mit dem ersten Auslass fluidisch verbindet. Darüber hinaus ist eine Steuereinrichtung zum Steuern einer Durchströmung des ersten Pfads und des vierten Pfads mit dem ersten Medium vorgesehen. Die Steuereinrichtung kann beispielsweise so ausgestaltet sein, dass sie den vierten Pfad öffnen und sperren kann, wobei optional auch wenigstens eine Zwischenstellung einstellbar sein kann. Alternativ kann die Steuereinrichtung so ausgestaltet sein, dass sie den ersten Pfad sperren und öffnen kann, wobei auch hier optional zumindest eine Zwischenstellung einstellbar sein kann. Bei gesperrtem viertem Pfad strömt das erste Medium durch den ersten Pfad. Bei geöffnetem vierten Pfad strömt das erste Medium aufgrund des erhöhten Strömungswiderstandes im ersten Pfad, der durch die wärmeübertragenden Kopplungen mit dem zweiten Pfad und mit dem dritten Pfad entsteht, vorwiegend durch den vierten Pfad. Grundsätzlich kann mit Hilfe der Steuereinrichtung eine beliebige Aufteilung einer Strömung des ersten Mediums auf den ersten Pfad und auf den vierten Pfad eingestellt werden. Beispielsweise kann die Steuereinrichtung abhängig vom Wärmegehalt des ersten Mediums und/oder vom Wärmebedarf des zweiten Mediums bzw. des dritten Mediums betätigt werden. Regelziel kann dabei beispielsweise die Vermeidung einer Überhitzung des zweiten Mediums und/oder des dritten Mediums bzw. das Einstellen einer Zieltemperatur für das erste Medium oder für das zweite Medium oder für das dritte Medium sein. Je mehr vom ersten Medium durch den ersten Pfad strömt, desto mehr Wärme kann an das zweite Medium und an das dritte Medium übertragen werden. Je höher der Anteil des ersten Mediums ist, der durch den vierten Pfad strömt, desto geringer ist die Wärmeübertragung auf das zweite Medium und das dritte Medium.

Erfindungsgemäß ist ein gemeinsames Gehäuse vorgesehen, das die genannten Einlässe und die genannten Auslässe aufweist und das die genannten Pfade enthält. Das gemeinsame Gehäuse besitzt somit separate Anschlüsse für den ersten Einlass, den zweiten Einlass, den dritten Einlass, den ersten Auslass, den zweiten Auslass und den dritten Auslass und enthält Strukturen, insbesondere Wände, Rohre und Leitungen, die den ersten Pfad, den zweiten Pfad und den dritten Pfad definieren. Sofern auch der vorstehend genannte vierte Pfad vorgesehen ist, ist auch der vierte Pfad im gemeinsamen Gehäuse ausgebildet. Durch die Verwendung eines gemeinsamen Gehäuses, lässt sich der hier vorgestellte Wärmeübertrager besonders einfach und kompakt in eine komplexe Vorrichtung integrieren, die ein Leitungssystem umfasst, in dessen Leitungen die einzelnen Pfade eingebunden werden können.

Erfindungsgemäß enthält das Gehäuse des Wärmeübertragers ein, vorzugsweise geradliniges und/oder zylindrisches, Rohr und weist einen, vorzugsweise geradlinigen und/oder zylindrischen, Mantel auf, der das Rohr unter Ausbildung eines Ringkanals umhüllt. Der erste Pfad ist durch den Ringkanal geführt. Der zweite Pfad ist durch eine im Ringkanal verlaufende, das Rohr schraubenförmig umschlingende erste Wendel geführt. Der dritte Pfad ist durch eine im Ringkanal verlaufende, das Rohr schraubenförmige umschlingende zweite Wendel geführt. Der vierte Pfad ist durch das Rohr geführt. Die zugehörige Steuereinrichtung weist ein im Rohr angeordnetes Steuerglied zum Verändern des durchströmbaren Querschnitts des Rohrs auf. Hierdurch ergibt sich eine besonders kompakte Bauweise für den Wärmeübertrager, wobei die jeweilige Wendel eine große wärmeübertragende Oberfläche bereitstellt und dementsprechend eine effiziente Wärmeübertragung zwischen dem ersten Medium und dem zweiten Medium bzw. dem dritten Medium ermöglicht. Im Ringkanal ist die zweite Wendel bezüglich der Strömungsrichtung des ersten Mediums stromab der ersten Wendel angeordnet. Dabei können die beiden Wendeln im Ringkanal axial aneinander grenzen. Die hier vorgestellte Rohrbauweise, bei welcher das Rohr und der Mantel runde, z.B. kreisförmige oder elliptische oder ovale, Querschnitte besitzen und sich zylindrisch erstrecken, ermöglicht primärseitig relativ hohe Drücke, wodurch eine Verwendung des Wärmeübertragers primärseitig im Abgasstrom erleichtert ist. Derartige Wendeln können innen wie außen ebenfalls relativ hohen Drücken ausgesetzt werden, was die Verwendung des Wärmeübertragers primärseitig in einem Abgasstrom und sekundärseitig z.B. in einem Abwärmenutzungskreis vereinfacht.

Sofern sekundärseitig mehr als zwei Medien bzw. Pfade vorgesehen sind, können auch mehr als zwei Wendeln vorhanden sein, die axial aufeinander folgen.

Das Rohr kann unmittelbar an den ersten Einlass und an den ersten Auslass angeschlossen sein und einen für das erste Medium durchlässigen, insbesondere perforierten, Einlassbereich und einen für das erste Medium durchlässigen, insbesondere perforierten, Auslassbereich aufweisen.

Gemäß einer vorteilhaften Weiterbildung kann zumindest eine der Wendeln ein Wendelrohr aufweisen, das innen das jeweilige Medium führt und das außen dem ersten Medium ausgesetzte Kühlrippen trägt. Zweckmäßig sind beide Wendeln mit einem derartigen Wendelrohr und Kühlrippen ausgestattet. Die Kühlrippen können als Ringscheiben ausgestaltet sein, die außen am Wendelrohr axial zueinander beabstandet angeordnet sind. Alternativ können die Kühlrippen auch mit einem Band realisiert sein, das schraubenförmig um das Wendelrohr gewickelt ist. Die Kühlrippen können dabei auf das Wendelrohr aufgepresst oder daran angelötet oder daran angeschweißt sein.

Als Materialien für das Gehäuse, insbesondere das Rohr und den Mantel, sowie für die Wendeln, insbesondere für das jeweilige Wendelrohr und für die Kühlrippen, kommen abhängig von den Einsatzbedingungen, bevorzugt Eisenlegierungen zum Einsatz, vorzugsweise Stahl, insbesondere Edelstahl. Ferner können auch Leichtmetalle bzw. Leichtmetalllegierungen zum Einsatz kommen, wie z.B. Aluminium oder Aluminiumlegierungen. Alternativ kann auch Kupfer bzw. eine Kupferlegierung zum Einsatz kommen. Zum Schutz vor aggressivem Abgas können die dem Abgas ausgesetzten Oberflächen auch mit einer, insbesondere keramischen, Schutzbeschichtung ausgestattet sein. Vorzugsweise können Wendeln aus Kupfer außen mit einer solchen Schutzbeschichtung versehen sein.

Eine erste erfindungsgemäße Vorrichtung umfasst eine Brennkraftmaschine, die eine Frischluftanlage zum Versorgen von Brennräumen der Brennkraftmaschine mit Frischluft und eine Abgasanlage zum Abführen von Abgas von den Brennräumen aufweist. Ferner ist die Vorrichtung mit einer Abwärmenutzungsanlage ausgestattet, die einen Abwärmenutzungskreis, in dem ein Arbeitsmedium zirkuliert, einen Verdampfer zum Verdampfen des Arbeitsmediums, stromab davon eine Expansionsmaschine zum Entspannen des Arbeitsmediums, stromab davon einen Kondensator zum Kondensieren des Arbeitsmediums und stromab davon eine Fördereinrichtung zum Antreiben des Arbeitsmediums im Abwärmenutzungskreis aufweist. Des Weiteren ist die Vorrichtung mit einem Kühlkreis ausgestattet, in dem ein Kühlmedium zirkuliert. Außerdem ist die Vorrichtung mit einem Wärmeübertrager der vorstehend beschriebenen Art ausgestattet, wobei der erste Pfad in die Abgasanlage eingebunden ist, so dass das Abgas das erste Medium bildet. Ferner ist der zweite Pfad in den Abwärmenutzungskreis eingebunden, so dass das Arbeitsmedium das zweite Medium bildet und dass die wärmeübertragende Kopplung zwischen erstem Pfad und zweitem Pfad den Verdampfer bildet. Schließlich ist der dritte Pfad in den Kühlkreis eingebunden, so dass das Kühlmedium das dritte Medium bildet. Innerhalb einer derartigen Vorrichtung definiert der hier vorgestellte Wärmeübertrager somit zum einen einen Verdampfer und zum anderen einen Kühler. Über den Verdampfer kann dem Abgas vergleichsweise viel Wärme entzogen werden, und zwar auf einem vergleichsweise hohen Temperaturniveau. Über den Kühler lässt sich das Abgas weiter abkühlen, beispielsweise auf eine gewünschte Zieltemperatur. Dabei kann der Kühlkreis auf einem deutlich niedrigeren Temperaturniveau betrieben werden als der Abwärmenutzungskreis. Die hier vorgestellte Vorrichtung lässt sich mit Hilfe des hier vorgestellten Wärmeübertragers vergleichsweise kompakt aufbauen.

Eine zweite erfindungsgemäße Vorrichtung unterscheidet sich von der vorstehend beschriebenen ersten Vorrichtung dadurch, dass zusätzlich eine Abgasrückführanlage zum Rückführen von Abgas von der Abgasanlage zur Frischluftanlage vorgesehen ist, wobei der Kühlkreis einen Kühler zum Kühlen des rückgeführten Abgases aufweist. In diesem Fall kann der Wärmeübertrager so in die Vorrichtung eingebaut sein, dass der erste Pfad in die Abgasrückführanlage eingebunden ist, so dass nunmehr das rückgeführte Abgas das erste Medium bildet. Der zweite Pfad ist auch hier in den Abwärmenutzungskreis eingebunden, so dass das Arbeitsmedium das zweite Medium bildet und dass die wärmeübertragende Kopplung zwischen dem ersten Pfad und dem zweiten Pfad den Verdampfer bildet. Auch bei dieser zweiten Vorrichtung ist der dritte Pfad in den Kühlkreis eingebunden, so dass das Kühlmedium das dritte Medium bildet. Außerdem bildet bei dieser zweiten Vorrichtung die wärmeübertragende Kopplung zwischen dem ersten Pfad und dem dritten Pfad den Kühler zum Kühlen des rückgeführten Abgases. Durch die hier vorgestellte Vorrichtung lässt sich besonders kompakt eine Abwärmenutzungsanlage in eine Abgasrückführung integrieren, so dass zum einen eine effiziente Kühlung des rückgeführten Abgases realisierbar ist, während zum anderen die dabei anfallende Wärme genutzt werden kann. Eine derartige Bauweise ist insbesondere dann von Vorteil, wenn bei vergleichsweise großvolumigen Brennkraftmaschinen vergleichsweise große Abgasrückführraten realisiert werden. Bei einer wärmeübertragenden Kopplung der Abgasrückführung mit dem Abwärmenutzungskreis mittels eines derartigen Wärmeübertragers lässt sich ein Motorkühlkreis erheblich entlasten, der zum Kühlen eines herkömmlichen Abgasrückführkühlers dient. Die gesamte Energie, die über den als Verdampfer wirkenden Teil des Wärmeübertragers dem Abgas entnommen werden kann, muss nicht mehr vom Motorkühlkreis aufgenommen werden.

Ferner ist es möglich, die Vorrichtung mit zumindest zwei solchen Wärmeübertragern auszustatten, wobei der eine dann primärseitig in der Abgasanlage und der andere dann primärseitig in der Abgasrückführanlage angeordnet sein kann. Sekundärseitig können die beiden Wärmeübertrager unabhängig voneinander verschaltet sein. Ebenso ist denkbar, die beiden Wärmeübertrager sekundärseitig in Reihe zu schalten, beispielsweise um das Arbeitsmedium des Abwärmenutzungskreises in dem zuerst durchströmten Wärmeübertrager zu verdampfen und im anschließend durchströmten Wärmeübertrager zu überhitzen.

Gemäß einer vorteilhaften Weiterbildung kann der Kühlkreis zum Kühlen der Brennkraftmaschine dienen. Zusätzlich oder alternativ kann der Kühlkreis zum Beheizen eines Luftstroms zur Klimatisierung eines Raums, insbesondere eines Passagierraums eines Fahrzeugs dienen.

Ein erfindungsgemäßes Fahrzeug, bei dem es sich beispielsweise um ein Landfahrzeug oder um ein Luftfahrzeug oder um ein Wasserfahrzeug handeln kann, umfasst einen Antriebsstrang zum Antreiben des Fahrzeugs sowie eine Vorrichtung der vorstehend beschriebenen Art, wobei die Brennkraftmaschine mit dem Antriebsstrang antriebsverbunden ist. Mit anderen Worten, im Fahrzeug dient die Brennkraftmaschine zum Antreiben des Fahrzeugs.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1 und 2: jeweils eine stark vereinfachte schaltplanartige Prinzipdarstellung eines Fahrzeugs mit einer Vorrichtung bei verschiedenen Ausführungsformen,
- Fig. 3: eine isometrische Ansicht eines Wärmeübertragers,
- Fig. 4 und 5: jeweils einen Längsschnitt des Wärmeübertragers bei verschiedenen Betriebszuständen,
- Fig. 6: eine isometrische Schnittansicht des Wärmeübertragers im Bereich eines Entkoppelelements,
- Fig. 7: ein vereinfachter Längsschnitt des Wärmeübertragers bei einer weiteren Ausführungsform.

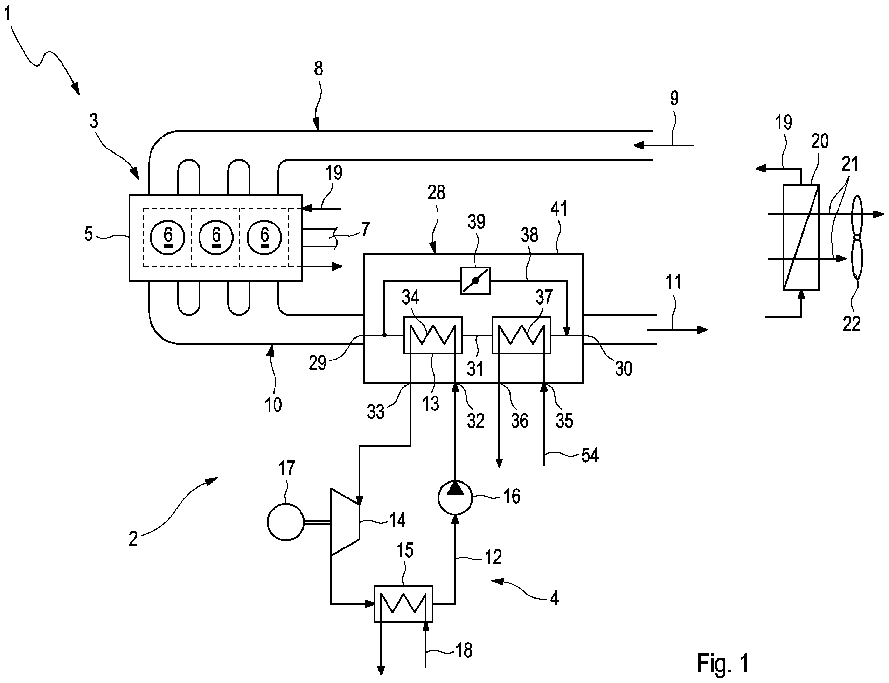

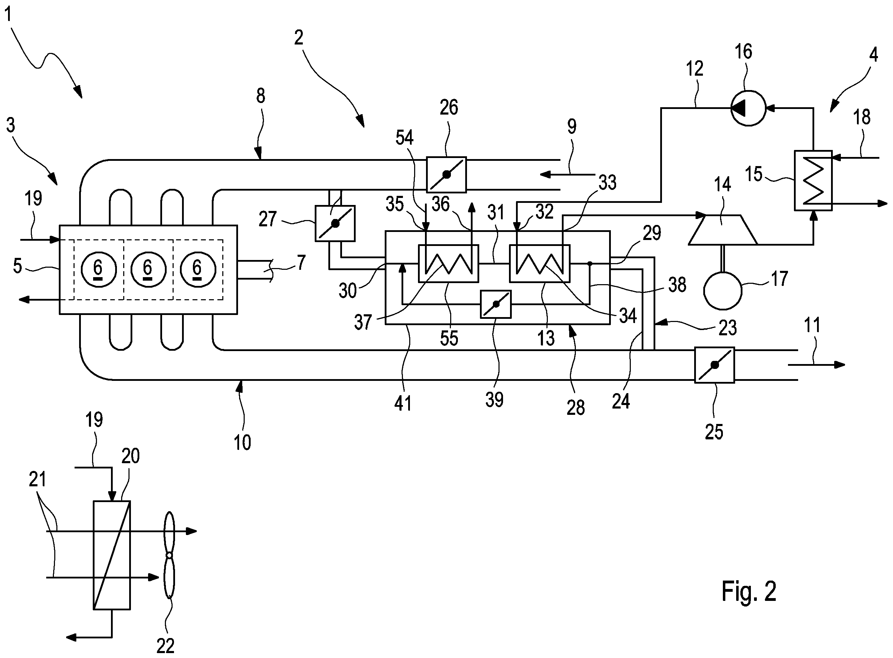

Entsprechend den Figuren 1 und 2 umfasst ein Fahrzeug 1, bei dem es sich vorzugsweise um ein Landfahrzeug, insbesondere um ein Straßenfahrzeug, alternativ jedoch um ein Wasserfahrzeug oder um ein Luftfahrzeug handeln kann, eine Vorrichtung 2, die ihrerseits eine Brennkraftmaschine 3 sowie eine Abwärmenutzungsanlage 4 umfasst. Die Brennkraftmaschine 3 besitzt einen Motorblock 5, in dem mehrere Brennräume 6 angeordnet sind, die beispielsweise durch Zylinder definiert sind, in denen Kolben hubverstellbar angeordnet sind. Die Brennkraftmaschine 3 dient im Fahrzeug 1 zum Antreiben des Fahrzeugs 1 und ist hierzu mit einem Antriebsstrang 7 des Fahrzeugs 1 antriebsverbunden. Beispielsweise treibt eine hier nicht gezeigte Kurbelwelle des Motorblocks 5 den Antriebsstrang 7 an.

Die Brennkraftmaschine 3 umfasst in üblicher Weise eine Frischluftanlage 8 zum Zuführen von Frischluft zu den Brennräumen 6. Eine entsprechende Frischluftströmung ist durch einen Pfeil 9 angedeutet. Ferner ist eine Abgasanlage 10 vorgesehen, die zum Abführen von Abgas von den Brennräumen 6 dient, wobei eine entsprechende Abgasströmung durch einen Pfeil 11 andeutet ist.

Die Abwärmenutzungsanlage 4 umfasst einen Abwärmenutzungskreis 12, in dem ein Arbeitsmedium zirkuliert und in dem in der Strömungsrichtung des Arbeitsmediums hintereinander ein Verdampfer 13 zum Verdampfen des Arbeitsmediums, eine Expansionsmaschine 14 zum Entspannen des Arbeitsmediums, ein Kondensator 15 zum Kondensieren des Arbeitsmediums und eine Fördereinrichtung 16 zum Antreiben des Arbeitsmediums im Abwärmenutzungskreis 12 angeordnet sind. Die Expansionsmaschine 14 treibt beispielsweise einen Generator 17 zur Stromerzeugung an, der beispielsweise mit einem hier nicht gezeigten elektrischen Energiespeicher, zum Beispiel mit einer Batterie, gekoppelt sein kann. Der Kondensator 15 ist in einen Kühlkreis 18 eingebunden, in dem ein Kühlmedium zirkuliert. Die Abwärmenutzungsanlage 4 arbeitet nach dem Rankine-Kreisprozess bzw. nach dem Rankine-Clausius-Kreisprozess.

Die Brennkraftmaschine 3 ist zur Kühlung des Motorblocks 5 ferner mit einem Kühlkreis 19 ausgestattet, wobei ein im Motorblock 5 verlaufender Kühlmittelpfad dabei mit unterbrochener Linie angedeutet ist. In diesen Kühlkreis 19 ist ein Kühler 20 eingebunden, der mit einer Kühlluftströmung 21 beaufschlagbar ist, die bei einem Fahrzeug 1 während des Fahrbetriebs entsteht, sogenannter Fahrtwind. Zusätzlich kann die Kühlluftströmung 21 mit Hilfe eines Gebläses 22 erzeugt bzw. verstärkt werden.

Gemäß Figur 2 kann die Vorrichtung 2 außerdem mit einer Abgasrückführanlage 23 ausgestattet sein, die eine Rückführung von Abgas von der Abgasanlage 10 zur Frischluftanlage 8 ermöglicht. Eine Abgasrückführleitung 24 ist hierzu abgasseitig stromauf einer Stauklappe 25 an die Abgasanlage 10 angeschlossen und frischluftseitig stromab einer Drosselklappe 26 an die Frischluftanlage 8 angeschlossen. Die Abgasrückführanlage 23 enthält außerdem ein Abgasrückführventil 27, das in der Abgasrückführleitung 24 angeordnet ist und zum Einstellen einer Abgasrückführrate genutzt werden kann.

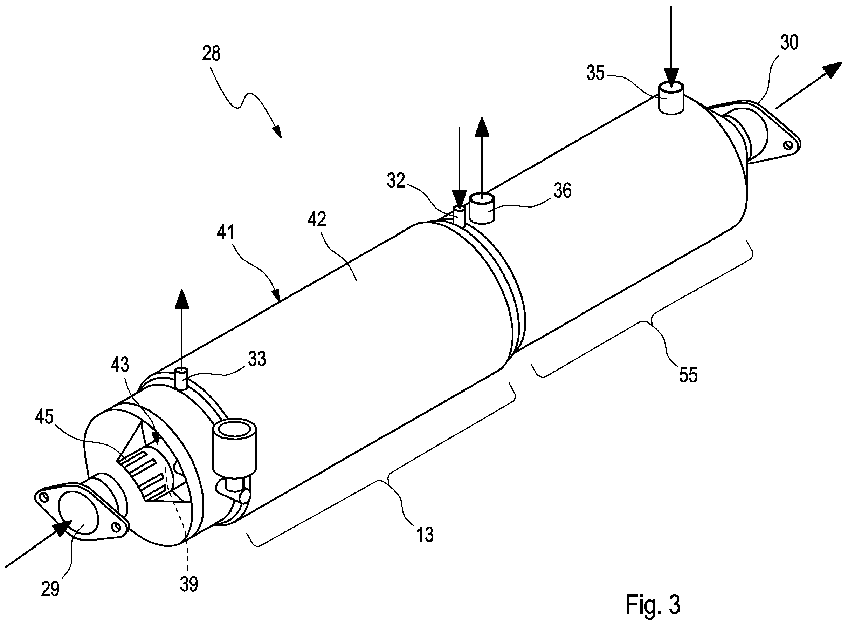

Die jeweilige Vorrichtung 2 ist außerdem mit wenigstens einem Wärmeübertrager 28 ausgestattet, der im Folgenden, insbesondere mit Bezug auf die Figuren 3 bis 7, näher erläutert wird.

Entsprechend den Figuren 1 bis 7 umfasst der Wärmeübertrager 28 einen ersten Einlass 29 und einen ersten Auslass 30 für ein primärseitiges, zu kühlendes erstes Medium. Erster Einlass 29 und erster Auslass 30 sind über einen das erste Medium führenden ersten Pfad 31 fluidisch miteinander verbunden. Der Wärmeübertrager 28 weist außerdem einen zweiten Einlass 32 und einen zweiten Auslass 33 für ein sekundärseitiges, zu beheizendes zweites Medium auf, die über einen das zweite Medium führenden zweiten Pfad 34 fluidisch miteinander verbunden sind. Ferner ist der Wärmeübertrager 28 mit einem dritten Einlass 35 und einem dritten Auslass 36 für ein sekundärseitiges, zu beheizendes drittes Medium ausgestattet, die über einen das dritte Medium führenden dritten Pfad 37 fluidisch miteinander verbunden sind. Im Wärmeübertrager 28 sind nun der zweite Pfad 34 und der dritte Pfad 37 jeweils mit dem ersten Pfad 31 mediengetrennt und wärmeübertragend gekoppelt. Dabei ist die wärmeübertragende Kopplung zwischen dem ersten Pfad 31 und dem zweiten Pfad 34 bezüglich der Strömungsrichtung des ersten Mediums stromauf der wärmeübertragenden Kopplung zwischen dem ersten Pfad 31 und dem dritten Pfad 37 realisiert.

Bei einer anderen Ausführungsform können außerdem sekundärseitig zumindest ein weiterer Einlass, Auslass und Pfad vorgesehen sein.

Bei den hier gezeigten Ausführungsformen weist der Wärmeübertrager 28 primärseitig außerdem einen vierten Pfad 38 auf, der ebenfalls zum Führen des ersten Mediums vorgesehen ist, wobei der vierte Pfad 38 unter Umgehung der wärmeübertragenden Kopplungen des ersten Pfads 31 mit dem zweiten Pfad 34 und mit dem dritten Pfad 37 den ersten Einlass 29 mit dem ersten Auslass 30 fluidisch verbindet. Insoweit definiert der vierte Pfad 38 einen Bypasspfad für den ersten Pfad 31 hinsichtlich der wärmeübertragenden Kopplungen mit dem zweiten Pfad 34 und dem dritten Pfad 37. Des Weiteren ist eine Steuereinrichtung 39 vorgesehen, mit deren Hilfe eine Durchströmung des ersten Pfads 31 und des vierten Pfads 38 mit dem ersten Medium gesteuert werden kann. Beispielsweise kann die Steuereinrichtung 39 ein Steuerglied 40 aufweisen, das beispielsweise mittels einer Klappe, vorzugsweise einer Schmetterlingsklappe, realisiert sein kann, um einen durchströmbaren Querschnitt im ersten Pfad 31 bevorzugt oder im vierten Pfad 38 zu verändern.

Vorzugsweise besitzt der Wärmeübertrager 28 ein gemeinsames Gehäuse 41, das die genannten Einlässe 29, 32, 35 und die genannten Auslässe 30, 33, 36 aufweist und das die genannten Pfade 31, 34, 37 und 38 enthält.

Gemäß der in den Figuren 3 bis 7 gezeigten bevorzugten Ausführungsform umfasst das Gehäuse 41 einen Mantel 42, der zylindrisch und geradlinig ausgestaltet ist. Ferner enthält das Gehäuse 41 ein Rohr 43, das ebenfalls geradlinig und zylindrisch ausgestaltet ist und das hier koaxial im Mantel 42 angeordnet ist. Dabei ist ein Innendurchmesser des Mantels 42 größer als ein Außendurchmesser des Rohrs 43, so dass der Mantel 42 das Rohr 43 unter Ausbildung eines Ringkanals 44 umhüllt. Das Rohr 43 ist über einen perforierten Einlassbereich 45 an den ersten Einlass 29 und über einen perforierten Auslassbereich 46 an den ersten Auslass 30 angeschlossen. Durch den perforierten Einlassbereich 45 ergibt sich eine fluidische Kopplung zwischen dem ersten Einlass 29 und einem Einlassbereich 47 des Ringkanals 44. Über die Perforation des Auslassbereichs 46 des Rohrs 43 ergibt sich eine fluidische Kopplung zwischen einem Auslassbereich 48 des Ringkanals 44 und dem ersten Auslass 30.

Dabei können Rohr 42 und Mantel 43 bei allen Ausführungsformen jeweils einen runden Querschnitt besitzen, der kreisförmig oder oval oder elliptisch sein kann.

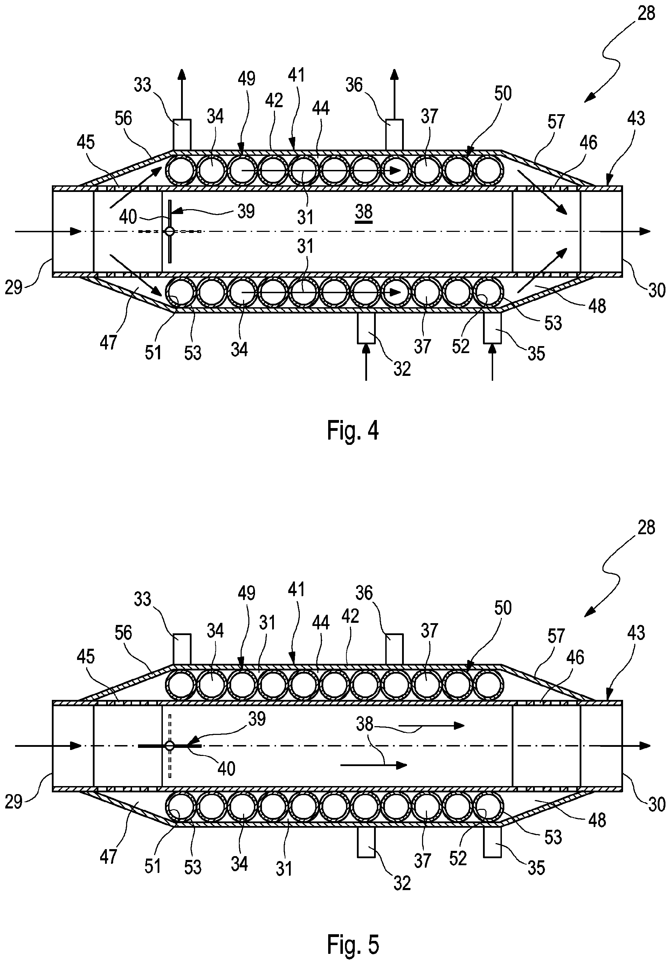

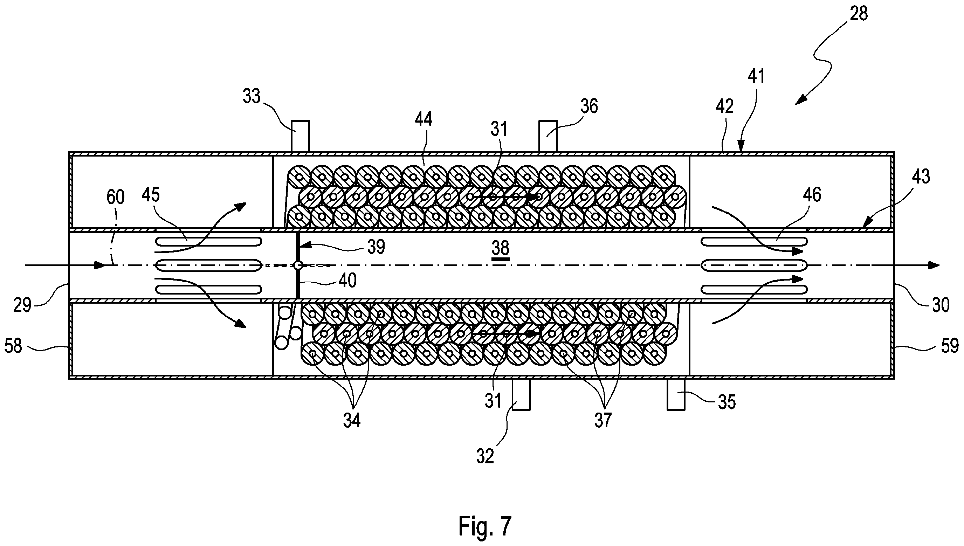

Der erste Pfad 31 ist durch den Ringkanal 44 geführt. Der vierte Pfad 38 ist dagegen durch das Rohr 43 geführt. Die Steuereinrichtung 39 besitzt auch hier ein Steuerglied 40, das im Rohr 43 angeordnet ist, so dass es einen durchströmbaren Querschnitt des Rohrs 43 variieren kann. In den Fig. 4 und 7 ist das Steuerglied 40 in eine Schließstellung verstellt, in der es den durchströmbaren Querschnitt des Rohrs 43 im Wesentlichen versperrt. In der Folge strömt das erste Medium durch den Ringkanal 44, also entlang des ersten Pfads 31. In Fig. 5 dagegen ist das Stellglied 40 in eine Offenstellung verstellt, in der es den Durchströmbaren Querschnitt des Rohrs 32 weitgehend freigibt. Aufgrund des sehr viel größeren Durchströmungswiderstands des ebenfalls offenen Ringkanals 44 strömt das erste Medium in diesem Fall durch das Rohr 43, also entlang des vierten Pfads 38 und umgeht so die wärmeübertragenden Kopplungen mit dem zweiten Pfad 34 und mit dem dritten Pfad 37. Es ist klar, dass grundsätzlich auch beliebige Zwischenstellungen einstellbar sein können. Mit unterbrochener Linie ist n den Fig. 4 und 7 die Offenstellung des Stellglieds 40 und in Fig. 5 die Schließstellung des Stellglieds 40 angedeutet.

Im Ringkanal 44 ist eine erste Wendel 49 angeordnet, die das Rohr 43 schraubenförmig umschlingt und durch die der zweite Pfad 34 verläuft. Mit anderen Worten, die erste Wendel 49 verbindet den zweiten Einlass 32 und den zweiten Auslass 33 fluidisch miteinander. Im Ringkanal 44 ist außerdem axial benachbart zur ersten Wendel 49 eine zweite Wendel 50 angeordnet, die ebenfalls das Rohr 43 schraubenförmig umschlingt. Die zweite Wendel 50 verbindet den dritten Einlass 35 mit dem dritten Auslass 36 fluidisch, so dass der dritte Pfad 37 durch die zweite Wendel 50 führt. Die jeweilige Wendel 49, 50 weist ein Wendelrohr 51 bzw. 52 auf, das innen das jeweilige Medium führt und das außen Kühlrippen 53 trägt, die im Ringkanal 44 dem ersten Medium ausgesetzt sind. Für jeden weiteren sekundärseitigen Pfad kann eine weitere Wendel vorgesehen sein.

In den Beispielen der Fig. 4 und 5 besitzt das Gehäuse 41 einen Einlasstrichter 56, der den einlassseitigen Übergang vom Rohr 43 zum Mantel 42 bildet und in dem sich der perforierte Einlassbereich 45 befindet, sowie einen Auslasstrichter 57, der den auslassseitigen Übergang vom Rohr 43 zum Mantel 42 bildet und in dem sich der perforierte Auslassbereich 46 befindet. Im Unterschied dazu zeigt Fig. 7 eine Ausführungsform, die anstelle des Einlasstrichters 56 einen einlassseitigen Endboden 58 oder Einlassendboden 58 und anstelle des Auslasstrichters 57 einen auslassseitigen Endboden 59 oder Auslassendboden 59 aufweist, die stirnseitige Enden des Gehäuses 41 definieren und die am Mantel 42 befestigt sind, beispielsweise mittels Bördelung. In diesem Fall sind Mantel 42 und Rohr 43 nicht direkt miteinander verbunden. Der Mantel 42 überdeckt in diesem Fall in der Axialrichtung 60 des Wärmeübertragers 28 sowohl den gasdurchlässigen Einlassbereich 45 als auch den gasdurchlässigen Auslassbereich 46.

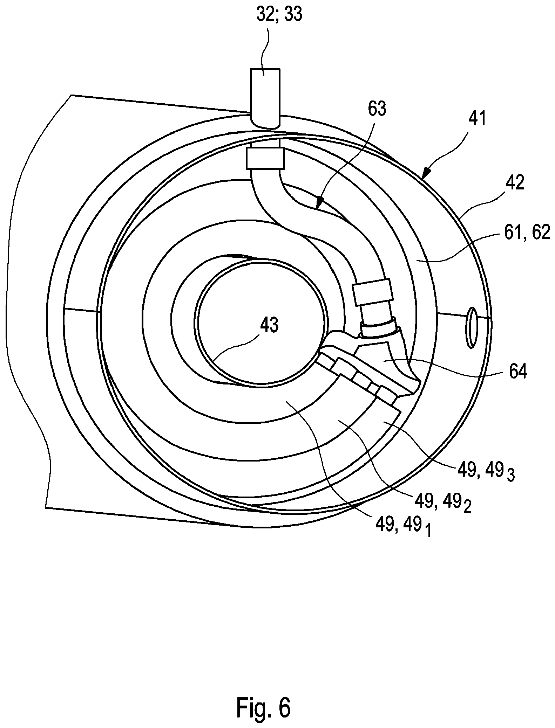

Gemäß Fig. 6 kann vorgesehen sein, dass die Wendeln 49, 50 radial innen über einen thermischen Isolator am Rohr 43 anliegen. Zusätzlich oder alternativ kann zumindest die erste Wendel 49 radial außen über einen thermischen Isolator 61 am Mantel 42 anliegen. Zusätzlich oder alternativ zu einer solchen außenliegenden Isolation 61 kann eine Lagerung 62 vorgesehen sein, die sich einerseits am Mantel 42 und andererseits an der jeweiligen Wendel 49 und/oder 50 abstützt, um die Wendel 49, 50 im Mantel 42 axial zu fixieren. Besonders vorteilhaft kann es sich bei der Lagerung 62 um eine thermisch isolierende Lagerung 62, z.B. in Form einer Lagermatte, handeln. In Fig. 6 ist eine solche außenliegende als Isolierung 61 dienende Lagerung 62 erkennbar. Gemäß einer bevorzugten Ausführungsform ist nur die erste Wendel 49 nach außen thermisch isoliert, während bei der zweiten Wendel 50 auf eine solche thermische Isolation verzichtet werden kann.

Während bei den Fig. 3 bis 5 genau zwei Wendeln 49, 50 vorgesehen sind, die radial einlagig bzw. einschichtig axial nebeneinander angeordnet sind, zeigen die Fig. 6 und 7 eine Ausführungsform, bei der zumindest eine dieser Wendeln 49, 50, bevorzugt die erste Wendel 49, radial dreilagig oder dreischichtig aufgebaut ist und aus drei Teilwendeln 49₁, 49₂ und 49₃ besteht, die radial benachbart angeordnet sind und koaxial ineinander angeordnet sind. Hierdurch lässt sich der durchströmbare Querschnitt des ersten Pfads 34 entsprechend vergrößern, was bei kurzer axialer Baulänge den Durchströmungswiderstand und den Druckverlust im ersten Pfad 34 reduziert. Entsprechenden kann gemäß Fig. 7 auch für den zweiten Pfad 37 gelten.

Entsprechend Fig. 6 erfolgt eine fluidische Verbindung der jeweiligen Wendel 49, 50, hier der ersten Wendel 49 mit dem zugehörigen gehäuseseitigen Sekundäranschluss, also mit dem zweiten Einlass 32 oder mit dem zweiten Auslass 33, gemäß einer bevorzugten Ausführungsform nicht direkt, sondern über ein Entkoppelelement 63, also indirekt. Das jeweilige Entkoppelelement 63 ist dabei im Inneren des Gehäuses 41 angeordnet. Es ist beweglich bzw. flexibel und kann Relativbewegungen zwischen der jeweiligen Wendel 49 und dem Gehäuse 41 bw. dem Mantel 42 ausgleichen. Zu derartigen Relativbewegungen kann es beispielsweise aufgrund von unterschiedlichen thermischen Ausdehnungskoeffizienten des Mantels 42 und der jeweiligen Wendel 49 kommen. Das Entkoppelelement 63 kann beispielsweise als metallischer Wellschlauch oder Agraffschlauch konfiguriert sein. Es kann radial ein- oder mehrschichtig aufgebaut sein. Es kann innen und/oder außen eine elastische Schutzschicht aufweisen, welche die Wellenstruktur des Wellschlauches abdeckt. Eine derartige Schutzschicht kann beispielsweise als Agraff ausgestaltet sein. Im Beispiel der Fig. 6 ist das Entkoppelelement 63 einenends mit dem jeweiligen Sekundäranschluss 32 bzw. 33 fluidisch verbunden und anderenends mit einem Verteilerelement 64 oder mit einem Sammlerelement 64, das seinerseits in Fig. 6 rein exemplarisch mit den zuvor genannten drei Teilwendeln 49₁, 49₂, 49₃ fluidisch verbunden ist. Sofern wie in den Beispielen der Fig. 3 bis 5 nur eine Wendel 49 vorgesehen ist, erfolgt die Verbindung des Entkoppelelements 63 dann direkt mit der Wendel 49.

Bei der in Figur 1 gezeigten Ausführungsform ist der Wärmeübertrager 28 so in die Vorrichtung 2 integriert, dass sein erster Pfad 31 in die Abgasanlage 10 eingebunden ist. Hierzu sind der erste Einlass 29 und der erste Auslass 30 an die Abgasanlage 10 angeschlossen. Folglich ist das erste Medium durch das Abgas gebildet. Der zweite Pfad 34 ist in den Abwärmenutzungskreis 12 eingebunden. Hierzu sind der zweite Einlass 32 und der zweite Auslass 33 an den Abwärmenutzungskreis 12 angeschlossen. In der Folge bildet das Arbeitsmedium das zweite Medium. Des Weiteren ist der Verdampfer 13 durch die wärmeübertragende Kopplung zwischen dem ersten Pfad 31 und dem zweiten Pfad 34 gebildet, also innerhalb des Wärmeübertragers 28 realisiert. Der dritte Pfad 37 ist nun in einen Kühlkreis 54 eingebunden, so dass ein Kühlmedium, das im Kühlkreis 54 zirkuliert, das dritte Medium bildet. Der Kühlkreis 54 kann dabei in den Kühlkreis 19 zum Kühlen des Motorblocks 5 und/oder in den Kühlkreis 18 zum Kühlen des Kondensators 15 eingebunden sein.

Bei der in Figur 2 gezeigten Ausführungsform ist der Wärmeübertrager 28 in die Abgasrückführanlage 23 integriert, derart, dass der erste Pfad 31 in die Abgasrückführanlage 23 bzw. deren Abgasrückführleitung 24 eingebunden ist. Hierzu sind der erste Einlass 29 und der erste Auslass 30 an die Abgasrückführanlage 23 angeschlossen, derart, dass das rückgeführte Abgas das erste Medium bildet. Auch hier ist der zweite Pfad 34 in den Abwärmenutzungskreis 12 eingebunden, so dass das Arbeitsmedium der Abwärmenutzungsanlage 4 das zweite Medium des Wärmeübertragers 28 bildet. Der dritte Pfad 37 ist wieder in den Kühlkreis 54 eingebunden, so dass dessen Kühlmedium das dritte Medium des Wärmeübertragers 28 bildet. Auch hier kann vorgesehen sein, dass der Kühlkreis 54 in den Kühlkreis 19 zum Kühlen des Motorblocks 5 und/oder in den Kühlkreis 18 zum Kühlen des Kondensators 15 eingebunden ist. Alternativ kann der Kühlkreis 54 auch mit einem Wärmeübertrager gekoppelt sein, mit dessen Hilfe ein Luftstrom beheizt werden kann, der einem Passagierraum des Fahrzeugs 1 zu dessen Klimatisierung zugeführt werden kann.

Bei der in Figur 2 gezeigten Ausführungsform ist der Verdampfer 13 der Abwärmenutzungsanlage 4 wieder durch die wärmeübertragende Kopplung des ersten Pfads 31 mit dem zweiten Pfad 34 gebildet, also im Wärmeübertrager 28 realisiert. Die wärmeübertragende Kopplung zwischen dem ersten Pfad 31 und dem dritten Pfad 37 definiert dagegen einen Abgasrückführkühler 55, mit dessen Hilfe das rückgeführte Abgas auf eine vorbestimmte Zieltemperatur abgekühlt werden kann. Bevorzugt ist der zugehörige Kühlkreis 54 in den Motorkühlkreis 19 oder in einen separaten Kühlkreis eingebunden, der über einen separaten Kühler ebenfalls mit Hilfe eines Kühlluftstroms beaufschlagt werden kann.

Für die in Figur 2 gezeigte Verwendung des Wärmeübertragers 28 in der Abgasrückführanlage 23 sind in Figur 3 durch geschweifte Klammern diejenigen Bereiche des Wärmeübertragers 28 angedeutet, die den Verdampfer 13 der Abwärmenutzungsanlage 4 bzw. den Kühler 55 der Abgasrückführanlage 23 bilden.

Bei den hier gezeigten Ausführungsformen sind die Strömungsrichtung des zweiten Mediums im zweiten Pfad 34 und die Strömungsrichtung des dritten Mediums im dritten Pfad 37 bezüglich der Strömungsrichtung des ersten Mediums im ersten Pfad 31 im Gegenstromangeordnet. Bei einer alternativen Ausführungsform kann dagegen vorgesehen sein, die Strömungsrichtung des dritten Mediums im dritten Pfad 37 bezüglich der Strömungsrichtung des ersten Mediums im ersten Pfad 31 im Gleichstrom anzuordnen, um eine dritte Tendenz zur Verdampfung des dritten Mediums, z.B. im AGR-Kühler 55, zu reduzieren. Das zweite Medium kann dabei im Gegenstrom bleiben.

## Patentansprüche

1. Wärmeübertrager
- mit einem ersten Einlass (29) und einem ersten Auslass (30) für ein zu kühlendes erstes Medium, die über einen das erste Medium führenden ersten Pfad (31) miteinander fluidisch verbunden sind,
- mit einem zweiten Einlass (32) und einem zweiten Auslass (33) für ein zu beheizendes zweites Medium, die über einen das zweite Medium führenden zweiten Pfad (34) miteinander fluidisch verbunden sind,
- mit einem dritten Einlass (35) und einem dritten Auslass (36) für ein zu beheizendes drittes Medium, die über einen das dritte Medium führenden dritten Pfad (37) fluidisch miteinander verbunden sind,
- wobei der erste Pfad (31) mit dem zweiten Pfad (34) und mit dem dritten Pfad (37) mediengetrennt und wärmeübertragend gekoppelt ist,
- wobei die wärmeübertragende Kopplung zwischen dem ersten Pfad (31) und dem zweiten Pfad (34) bezüglich der Strömungsrichtung des ersten Mediums stromauf der wärmeübertragenden Kopplung zwischen dem ersten Pfad (31) und dem dritten Pfad (37) erfolgt,
- wobei ein vierter Pfad (38) zum Führen des ersten Mediums vorgesehen ist, der unter Umgehung der wärmeübertragenden Kopplungen des ersten Pfads (31) mit dem zweiten Pfad (34) und mit dem dritten Pfad (37) den ersten Einlass (29) mit dem ersten Auslass (30) fluidisch verbindet,
- wobei eine Steuereinrichtung (39) zum Steuern einer Durchströmung des ersten Pfads (31) und des vierten Pfads (38) mit dem ersten Medium vorgesehen ist,
- wobei ein gemeinsames Gehäuse (41) vorgesehen ist, das die genannten Einlässe (29, 32, 35) und die genannten Auslässe (30, 33, 36) aufweist und das die genannten Pfade (31, 34, 37, 38) enthält,
**dadurch gekennzeichnet,**
- **dass** das Gehäuse (41) ein Rohr (43) enthält und einen Mantel (42) aufweist, der das Rohr (43) unter Ausbildung eines Ringkanals (44) umhüllt,
- **dass** der erste Pfad (31) durch den Ringkanal (44) führt,
- **dass** der zweite Pfad (34) durch eine im Ringkanal (44) verlaufende, das Rohr (43) schraubenförmig umschlingende erste Wendel (49) führt,
- **dass** der dritte Pfad (37) durch eine im Ringkanal (44) verlaufende, das Rohr (43) schraubenförmig umschlingende zweite Wendel (50) führt,
- **dass** der vierte Pfad (38) durch das Rohr (43) führt,
- **dass** die Steuereinrichtung (39) ein im Rohr (43) angeordnetes Steuerglied (40) zum Verändern des durchströmbaren Querschnitts des Rohrs (43) aufweist,
- **dass** zumindest eine Wendel (49) über ein Entkoppelelement (63) mit dem zugehörigen Einlass (32; 35) oder mit dem zugehörigen Auslass (33; 36) fluidisch verbunden ist,
- **dass** das jeweilige Entkoppelelement (63) beweglich und/oder flexibel ist, derart, dass es Relativbewegungen zwischen der jeweiligen Wendel (49) und dem Gehäuse (41) ausgleichen kann.

2. Wärmeübertrager nach Anspruch 1,
**dadurch gekennzeichnet,**
**dass** zumindest eine der Wendeln (49, 50) ein Wendelrohr (51, 52) aufweist, das innen das jeweilige Medium führt und außen dem ersten Medium ausgesetzte Kühlrippen (53) trägt.

3. Vorrichtung
- mit einer Brennkraftmaschine (3), die eine Frischluftanlage (8) zum Zuführen von Frischluft zu Brennräumen (6) der Brennkraftmaschine (3) und eine Abgasanlage (10) zum Abführen von Abgas von den Brennräumen (6) aufweist,
- mit einer Abwärmenutzungsanlage (4), die in einem Abwärmenutzungskreis (12), in dem ein Arbeitsmedium zirkuliert, einen Verdampfer (13) zum Verdampfen des Arbeitsmediums, stromab davon eine Expansionsmaschine (14) zum Entspannen des Arbeitsmediums, stromab davon einen Kondensator (15) zum Kondensieren des Arbeitsmediums und stromab davon eine Fördereinrichtung (16) zum Antreiben des Arbeitsmediums im Abwärmenutzungskreis (12) aufweist,
- mit einem Kühlkreis (54), in dem ein Kühlmedium zirkuliert,
- mit mindestens einem Wärmeübertrager (28) nach Anspruch 1 oder 2,
- wobei der erste Pfad (31) in die Abgasanlage (10) eingebunden ist, so dass das Abgas das erste Medium bildet,
- wobei der zweite Pfad (34) in den Abwärmenutzungskreis (12) eingebunden ist, so dass das Arbeitsmedium das zweite Medium bildet und dass die wärmeübertragende Kopplung zwischen dem ersten Pfad (31) und dem zweiten Pfad (34) den Verdampfer (13) bildet,
- wobei der dritte Pfad (37) in den Kühlkreis (54) eingebunden ist, so dass das Kühlmedium das dritte Medium bildet.

4. Vorrichtung
- mit einer Brennkraftmaschine (3), die eine Frischluftanlage (8) zum Zuführen von Frischluft zu Brennräumen (6) der Brennkraftmaschine (3), eine Abgasanlage (10) zum Abführen von Abgas von den Brennräumen (6) sowie eine Abgasrückführanlage (23) zum Rückführen von Abgas von der Abgasanlage (10) zur Frischluftanlage (8) aufweist,
- mit einer Abwärmenutzungsanlage (4), die in einem Abwärmenutzungskreis (12), in dem ein Arbeitsmedium zirkuliert, ein Verdampfer (13) zum Verdampfen des Arbeitsmediums, stromab davon eine Expansionsmaschine (14) zum Entspannen des Arbeitsmediums, stromab davon einen Kondensator (15) zum Kondensieren des Arbeitsmediums und stromab davon eine Fördereinrichtung (16) zum Antreiben des Arbeitsmediums im Abwärmenutzungskreis (12) aufweist,
- mit einem Kühlkreis (54), in dem ein Kühlmedium zirkuliert und der einen Kühler (55) zum Kühlen des rückgeführten Abgases aufweist,
- mit mindestens einem Wärmeübertrager (28) nach Anspruch 1 oder 2,
- wobei der erste Pfad (31) in die Abgasrückführanlage (23) eingebunden ist, so dass das rückgeführte Abgas das erste Medium bildet,
- wobei der zweite Pfad (34) in den Abwärmenutzungskreis (12) eingebunden ist, so dass das Arbeitsmedium das zweite Medium bildet und dass die wärmeübertragende Kopplung zwischen dem ersten Pfad (31) und dem zweiten Pfad (34) den Verdampfer (13) bildet,
- wobei der dritte Pfad (37) in den Kühlkreis (54) eingebunden ist, so dass das Kühlmedium das dritte Medium bildet und dass die wärmeübertragende Kopplung zwischen dem ersten Pfad (31) und dem dritten Pfad (37) den Kühler (55) bildet.

5. Vorrichtung nach Anspruch 3 oder 4,
**dadurch gekennzeichnet,**
**dass** der Kühlkreis (54) zum Kühlen der Brennkraftmaschine (3) und/oder zum Beheizen eines Luftstroms zur Klimatisierung eines Raums, insbesondere eines Passagierraums eines Fahrzeugs (1), dient.

6. Fahrzeug, insbesondere Landfahrzeug oder Luftfahrzeug oder Wasserfahrzeug, das einen Antriebsstrang (7) zum Antreiben des Fahrzeugs (1) und eine Vorrichtung (2) nach einem der Ansprüche 3 bis 5 aufweist, wobei die Brennkraftmaschine (3) mit dem Antriebsstrang (7) antriebsverbunden ist.

## Claims

1. A heat transfer unit
- with a first inlet (29) and a first outlet (30) for a first medium to be cooled, which are fluidically interconnected via a first path (31) conducting the first medium,
- with a second inlet (32) and a second outlet (33) for a second medium to be heated, which are fluidically interconnected via a second path (34) conducting the second medium,
- with a third inlet (35) and a third outlet (36) for a third medium to be heated, which are fluidically interconnected via a third path (37) conducting the third medium,
- wherein the first path (31) is coupled to the second path (34) and to the third path (37) in a media-separated and heat-transferring manner,
- wherein the heat-transferring coupling between the first path (31) and the second path (34) with respect to the flow direction of the first medium takes place upstream of the heat-transferring coupling between the first path (31) and the third path (37),
- wherein a fourth path (38) for conducting the first medium is provided, which subject to bypassing the heat-transferring couplings of the first path (31) to the second path (34) and to the third path (37), fluidically interconnects the first inlet (29) to the first outlet (30),
- wherein a control unit (39) for controlling a flow of the first medium through the first path (31) and the fourth path (38) is provided,
- wherein a common housing (41) is provided, which comprises the mentioned inlets (29, 32, 35) and the mentioned outlets (30, 33, 36) and which contains the mentioned paths (31, 34, 37, 38),
**characterized in**
- **that** the housing (41) contains a tube (43) and comprises a jacket (42), which envelopes the tube (43) subject to forming an annular channel (44),
- **that** the first path (31) leads through the annular channel (44),
- **that** the second path (34) leads through a first coil (49) helically embracing the tube (43) which extends in the annular channel (44),
- **that** the third path (37) leads through a second coil (50) helically embracing the tube (43) and extending in the annular channel (44),
- **that** the fourth path (38) leads through the tube (43),
- **that** the control device comprises a control element (40) arranged in the tube (43) for changing the through-flow-capable cross section of the tube (43),
- **that** at least one coil (49) is fluidically connected to the associated inlet (32; 35) or to the associated outlet (33; 36) via a decoupling element (63),
- **that** the respective decoupling element (63) is movable and/or flexible in such a way that it can compensate relative movements between the respective coil (49) and the housing (41).

2. The heat transfer unit according to Claim 1, **characterized in that** at least one of the coils (49, 50) comprises a coil tube (51, 52), which inside conducts the respective medium and outside carries cooling fins (53) exposed to the first medium.

3. A device
- with an internal combustion engine (3), which comprises a fresh air system (8) for feeding fresh air to combustion chambers (6) of the internal combustion engine (3) and an exhaust system (10) for discharging exhaust gas from the combustion chambers (6),
- with a waste heat recovery system (4), which in a waste heat recovery circuit (12), in which a working medium circulates, comprises an evaporator (13) for evaporating the working medium, downstream thereof an expansion machine (14) for expanding the working medium, downstream thereof a condenser (15) for condensing the working medium and downstream thereof a conveying device (16) for driving the working medium in the waste heat recovery circuit (12),
- with a cooling circuit (54), in which a cooling medium circulates,
- with at least one heat transfer unit (28) according to Claim 1 or 2,
- wherein the first path (31) is incorporated in the exhaust system (10), so that the exhaust gas forms the first medium,
- wherein the second path (34) is incorporated in the waste heat recovery circuit (12) so that the working medium forms the second medium and that the heat-transferring coupling between the first path (31) and the second path (34) forms the evaporator (13),
- wherein the third path (37) is incorporated in the cooling circuit (54) so that the cooling medium forms the third medium.

4. A device
- with an internal combustion engine (3), which comprises a fresh air system (8) for feeding fresh air to combustion chambers (6) of the internal combustion engine (3), an exhaust system (10) for discharging exhaust gas from the combustion chambers (6), and an exhaust gas recirculation system (23) for recirculating exhaust gas from the exhaust system (10) to the fresh air system (8),
- with a waste heat recovery system (4), which in a waste heat recovery circuit (12), in which a working medium circulates, comprises an evaporator (13) for evaporating the working medium, downstream thereof an expansion machine (14) for expanding the working medium, downstream thereof a condenser (15) for condensing the working medium and downstream thereof a conveying device (16) for driving the working medium in the waste heat recovery circuit (12),
- with a cooling circuit (54), in which a cooling medium circulates,
- with at least one heat transfer unit (28) according to Claim 1 or 2,
- wherein the first path (31) is incorporated in the exhaust system (23), so that the exhaust gas forms the first medium,
- wherein the second path (34) is incorporated in the waste heat recovery circuit (12) so that the working medium forms the second medium and that the heat-transferring coupling between the first path (31) and the second path (34) forms the evaporator (13),
- wherein the third path (37) is incorporated in the cooling circuit (54) so that the cooling medium forms the third medium is incorporated in the cooling circuit (54), so that the cooling medium forms the third medium and that the heat-transferring coupling between the first path (31) and the third path (37) forms the cooler (55).

5. The device according to Claim 3 or 4, **characterized in that** the cooling circuit (54) serves for cooling the internal combustion engine (3) and/or for heating an airflow for air-conditioning a room, in particular a passenger compartment of a vehicle (1).

6. A vehicle, in particular land-based vehicle or aircraft or watercraft, which comprises a drive train (7) for driving the vehicle (1) and a device (2) according to any one of the Claims 3 to 5, wherein the internal combustion engine (3) is drive-connected to the drive train (7).

## Revendications

1. Echangeur de chaleur
- avec une première entrée (29) et une première sortie (30) pour un premier milieu à refroidir, lesquelles sont reliées l'une à l'autre de manière fluidique par l'intermédiaire d'un premier chemin (31) acheminant le premier milieu,
- avec une deuxième entrée (32) et une deuxième sortie (33) pour un deuxième milieu à chauffer, lesquelles sont reliées l'une à l'autre de manière fluidique par l'intermédiaire d'un deuxième chemin (34) acheminant le deuxième milieu,
- avec une troisième entrée (35) et une troisième sortie (36) pour un troisième milieu à chauffer, lesquelles sont reliées l'une à l'autre de manière fluidique par l'intermédiaire d'un troisième chemin (37) acheminant le troisième milieu,
- dans lequel le premier chemin (31) est couplé avec séparation de milieu et par transmission de chaleur au deuxième chemin (34) et au troisième chemin (37),
- dans lequel le couplage à transmission de chaleur entre le premier chemin (31) et le deuxième chemin (34) est effectué par rapport au sens d'écoulement du premier milieu en amont du couplage à transmission de chaleur entre le premier chemin (31) et le troisième chemin (37),
- dans lequel un quatrième chemin (38) servant à acheminer le premier milieu est prévu, lequel relie de manière fluidique, en contournant les couplages à transmission de chaleur du premier chemin (31) au deuxième chemin (34) et au troisième chemin (37), la première entrée (29) à la première sortie (30),
- dans lequel un système de commande (39) servant à commander une traversée du premier chemin (31) et du quatrième chemin (38) par le premier milieu est prévu,
- dans lequel un boîtier (41) commun est prévu, lequel présente les entrées (29, 32, 35) mentionnées et les sorties (30, 33, 36) mentionnées et qui contient les chemins (31, 34, 37, 38) mentionnés,
**caractérisé en ce**
- **que** le boîtier (41) contient un tube (43) et présente une enveloppe (42), qui enveloppe le tube (43) en formant un canal annulaire (44),
- **que** le premier chemin (31) mène à travers le canal annulaire (44),
- **que** le deuxième chemin (34) mène à travers une première hélice (49) s'étendant dans le canal annulaire (44), entourant le tube (43) de manière à présenter une forme hélicoïdale,
- **que** le troisième chemin (37) mène à travers une deuxième hélice (50) s'étendant dans le canal annulaire (44), entourant le tube (43) de manière à présenter une forme hélicoïdale,
- **que** le quatrième chemin (38) mène à travers le tube (43),
- **que** le système de commande (39) présente un organe de commande (40) disposé dans le tube (43), servant à modifier la section transversale pouvant être traversée du tube (43),
- **qu'**au moins une hélice (49) est reliée de manière fluidique, par l'intermédiaire d'un élément de découplage (63), à l'entrée (32 ; 35) associée ou à la sortie (33 ; 36) associée,
- **que** l'élément de découplage (63) respectif est mobile et/ou flexible de telle manière qu'il peut compenser des déplacements relatifs entre l'hélice (49) respective et le boîtier (41).

2. Echangeur de chaleur selon la revendication 1,
**caractérisé en ce**
**qu'**au moins une des hélices (49, 50) présente un tube hélicoïdal (51, 52), qui achemine à l'intérieur le milieu respectif et qui supporte à l'extérieur des nervures de refroidissement (53) exposées au premier milieu.

3. Dispositif
- avec un moteur à combustion interne (3), qui présente un système d'air frais (8) servant à amener de l'air frais à des chambres de combustion (6) du moteur à combustion interne (3) et un système d'échappement (10) servant à évacuer des gaz d'échappement des chambres de combustion (6),
- avec un système d'exploitation de chaleur perdue (4), qui présente, dans un circuit d'exploitation de chaleur perdue (12) dans lequel un milieu de travail circule, un évaporateur (13) servant à évaporer le milieu de travail, en aval de ce dernier un moteur à expansion (14) servant à détendre le milieu de travail, en aval de ce dernier un condensateur (15) servant à condenser le milieu de travail et en aval de ce dernier un système de transport (16) servant à entraîner le milieu de travail dans le circuit d'exploitation de chaleur perdue (12),
- avec un circuit de refroidissement (54), dans lequel un milieu de refroidissement circule,
- avec au moins un échangeur de chaleur (28) selon la revendication 1 ou 2,
- dans lequel le premier chemin (31) est intégré dans le système d'échappement (10) de telle sorte que les gaz d'échappement forment le premier milieu,
- dans lequel le deuxième chemin (34) est intégré dans le circuit d'exploitation de chaleur perdue (12) de telle sorte que le milieu de travail forme le deuxième milieu et que le couplage à transmission de chaleur entre le premier chemin (31) et le deuxième chemin (34) forme l'évaporateur (13),
- dans lequel le troisième chemin (37) est intégré dans le circuit de refroidissement (54) de telle sorte que le milieu de refroidissement forme le troisième milieu.

4. Dispositif
- avec un moteur à combustion interne (3), qui présente un système d'air frais (8) servant à amener de l'air frais à des chambres de combustion (6) du moteur à combustion interne (3), un système d'échappement (10) servant à évacuer des gaz d'échappement des chambres de combustion (6), ainsi qu'un système de reflux de gaz d'échappement (23) servant à refouler des gaz d'échappement depuis le système d'échappement (10) vers le système d'air frais (8),
- avec un système d'exploitation de chaleur perdue (4), qui présente, dans un circuit d'exploitation de chaleur perdue (12) dans lequel un milieu de travail circule, un évaporateur (13) servant à évaporer le milieu de travail, en aval de ce dernier un moteur à expansion (14) servant à détendre le milieu de travail, en aval de ce dernier un condensateur (15) servant à condenser le milieu de travail et en aval de ce dernier un système de transport (16) servant à entraîner le milieu de travail dans le circuit d'exploitation de chaleur perdue (12),
- avec un circuit de refroidissement (54), dans lequel un milieu de refroidissement circule et qui présente un refroidisseur (55) servant à refroidir les gaz d'échappement refoulés,
- avec au moins un échangeur de chaleur (28) selon la revendication 1 ou 2,
- dans lequel le premier chemin (31) est intégré dans le système de reflux de gaz d'échappement (23) de telle sorte que les gaz d'échappement refoulés forment le premier milieu,
- dans lequel le deuxième chemin (34) est intégré dans le circuit d'exploitation de chaleur perdue (12) de telle sorte que le milieu de travail forme le deuxième milieu et que le couplage à transmission de chaleur entre le premier chemin (31) et le deuxième chemin (34) forme l'évaporateur (13),
- dans lequel le troisième chemin (37) est intégré dans le circuit de refroidissement (54) de telle sorte que le milieu de refroidissement forme le troisième milieu et que le couplage à transmission de chaleur entre le premier chemin (31) et le troisième chemin (37) forme le refroidisseur (55).

5. Dispositif selon la revendication 3 ou 4,
**caractérisé en ce**
**que** le circuit de refroidissement (54) sert à refroidir le moteur à combustion interne (3) et/ou à chauffer un flux d'air servant à climatiser une pièce, en particulier un habitacle d'un véhicule (1).

6. Véhicule, en particulier véhicule terrestre ou aéronef ou bateau, qui présente une chaîne cinématique (7) servant à entraîner le véhicule (1) et un dispositif (2) selon l'une quelconque des revendications 3 à 5, dans lequel le moteur à combustion interne (3) est relié en entraînement à la chaîne cinématique (7).
